# EUROPEAN PATENT SPECIFICATION

(11) **EP 3 086 171 B1**
(45) Date of publication and mention of the grant of the patent: **14.03.2018**
(21) Application number: 15164410.1
(22) Date of filing: 21.04.2015
(51) Int. Cl.: G02F 1/1345, F21V 8/00

(54) **DISPLAY DEVICE**
ANZEIGEVORRICHTUNG
DISPOSITIF D'AFFICHAGE

(43) Date of publication of application: 26.10.2016
(73) Proprietor: Himax Display, Inc., Tainan City 74148 (TW)
(72) Inventor: Chan, Shu-Chuan, 74148 Tainan City (TW)
(74) Representative: Becker Kurig Straus

(56) References cited:
- EP-A2- 2 549 177
- WO-A1-2012/081395
- US-A1- 2011 109 841
- US-A1- 2012 170 317

## Description

### Field of the Invention

The present invention relates to a display device, particularly a display device capable of preventing image sticking from occurring in a display panel.

### Background of the Invention

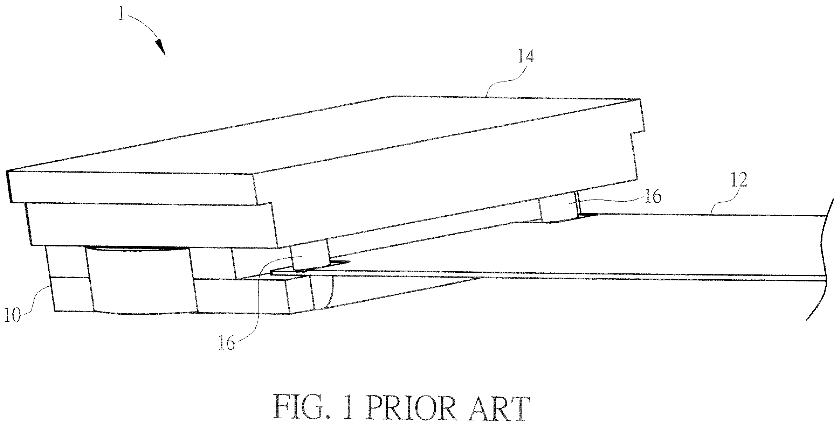

Referring to FIG. 1, FIG. 1 is a perspective view illustrating a display device 1 of the prior art. As shown in FIG. 1, the display device 1 includes a display panel 10, a circuit board 12, a light guide structure 14 and two paste materials 16. The circuit board 12 and the light guide structure 14 are disposed on the display panel 10. In general, there is a light source (not shown) disposed in the light guide structure 14, so as to form a front light module. The two paste materials are formed between the circuit board 12 and the light guide structure 14, so as to electrically connect the circuit board 12 and the light source. When the display device 1 is operated in an environment with high temperature and high humidity for a long span of time (e.g. 240 hours), the paste materials 16 may deform due to thermal expansion and contraction, such that image sticking may occur in the display panel.

Moreover, the related art European Patent Publication No. 2549177 (hereinafter '177 art) provides a backlight unit including an elastic member disposed between a light source module and a bottom chassis to effectively dissipate heat generated from the light source module, and the related art US Patent Publication No. 20120170317 (hereinafter '317 art) provides a solution to the problem of the conventional backlight module, in which the fabrication process of providing the LEDs serving as light sources to the light guide plate is complex and costly. However, '177 art and '317 art both do not provide any solutions for preventing image sticking from occurring in a display panel.

### Summary of the Invention

The present invention aims at providing a display device capable of preventing image sticking from occurring in a display panel, thereby resolving the aforesaid problems.

This is achieved by a display device according to claim 1. The dependent claims pertain to corresponding further developments and improvements.

As will be seen more clearly from the detailed description following below, the claimed display device includes a display panel, a circuit board, a light guide structure and two paste materials. The circuit board is disposed on the display panel. The light guide structure is disposed on the display panel. The light guide structure has a bottom surface and a peripheral surface, wherein the bottom surface is oriented toward the display panel and the peripheral surface is adjacent to the bottom surface. Two plating pads are formed on the bottom surface. Two first recesses are formed on the peripheral surface and corresponding to the two plating pads. The two paste materials are formed between the two plating pads and the circuit board.

### Brief Description of the Drawings

In the following, the invention is further illustrated by way of example, taking reference to the accompanying drawings thereof:
FIG. 1 is a perspective view illustrating a display device of the prior art,
FIG. 2 is a perspective view illustrating a display device according to an embodiment of the invention,
FIG. 3 is a perspective view illustrating the light guide structure shown in FIG. 2 from another viewing angle,
FIG. 4 is a perspective view illustrating a display device according to another embodiment of the invention, and
FIG. 5 is a perspective view illustrating a light guide structure according to another embodiment of the invention.

### Detailed Description

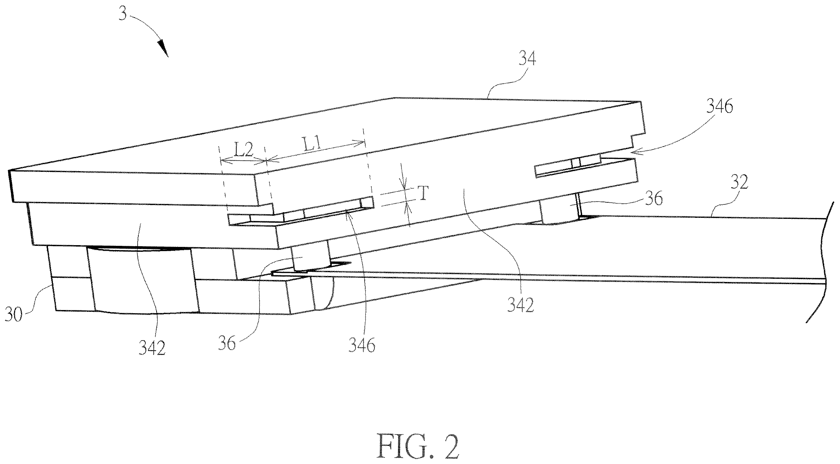

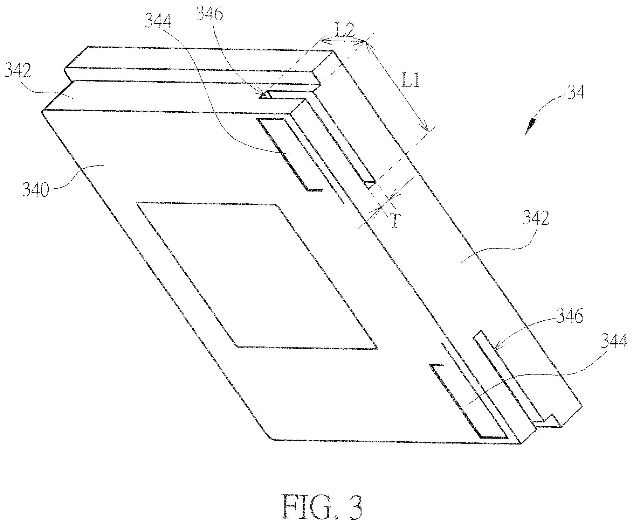

Referring to FIGs. 2 and 3, FIG. 2 is a perspective view illustrating a display device 3 according to an embodiment of the invention, and FIG. 3 is a perspective view illustrating the light guide structure 34 shown in FIG. 2 from another viewing angle.

As shown in FIG. 2, the display device 3 includes a display panel 30, a circuit board 32, a light guide structure 34 and two paste materials 36. In this embodiment, the display panel 30 may be a liquid crystal display (LCD) panel or other display panels, the circuit board 32 may be a flexible printed circuit board (FPC) or other circuit boards, and the paste materials 36 may be silver pastes or other paste materials. The light guide structure 34 may be made of, but not limited to, liquid crystal polymer (LCP).

The circuit board 32 and the light guide structure 34 are disposed on the display panel 30. In general, there is a light source (e.g. light emitting diode, not shown) disposed in the light guide structure 34, so as to form a front light module. The light guide structure 34 has a bottom surface 340 and a peripheral surface 342, wherein the bottom surface 340 is oriented toward the display panel 30 as the light guide structure 34 is disposed on the display panel 30, and the peripheral surface 342 is adjacent to the bottom surface 340. As shown in FIG. 3, two plating pads 344 are formed on the bottom surface 340. Furthermore, two first recesses 346 are formed on the peripheral surface 342 and corresponding to the two plating pads 344. The two paste materials 36 are formed between the two plating pads 344 and the circuit board 32, so as to electrically connect the circuit board 32 and the light source (not shown) within the light guide structure 34.

When the paste materials 36 deform due to thermal expansion and contraction, the first recesses 346 function as a spring, such that the plating pads 344 can be pulled down as the paste materials 36 contract and the plating pads 344 can be lifted up as the paste materials 36 expand. Accordingly, stress concentration is reduced in the paste materials 36 and image sticking is prevented from occurring in the display panel 30.

Preferably, a thickness T of the first recess 346 in a direction perpendicular to the bottom surface 340 may be larger than or equal to 0.1 mm, and a length L1, L2 of the first recess 346 in a direction parallel to the bottom surface 340 may exceed the plating pad 344, such that stress concentration may be reduced in the paste materials 36 more effectively and image sticking may be prevented from occurring in the display panel 30 more effectively.

In this embodiment, the two first recesses 346 may be formed to penetrate or not penetrate through an inner wall of the light guide structure 34 according to practical applications.

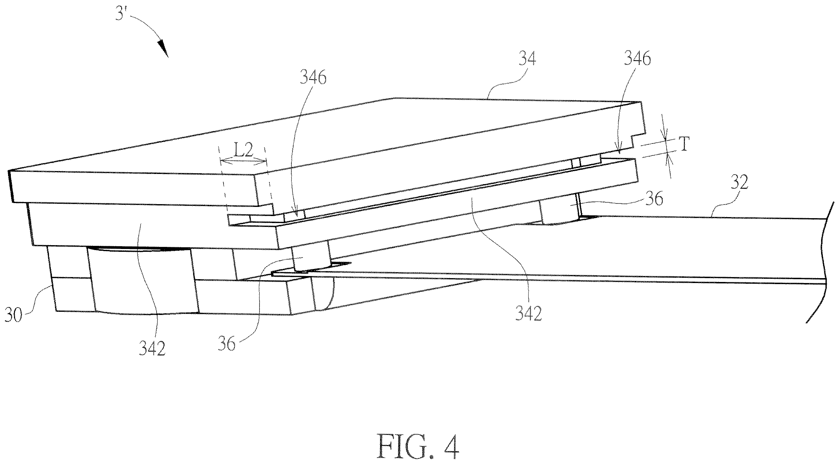

Referring to FIG. 4 along with FIG. 2, FIG. 4 is a perspective view illustrating a display device 3' according to another embodiment of the invention. The difference between the display device 3' and the aforesaid display device 3 is that the two first recesses 346 of the display device 3' are formed to communicate with each other, so as to form a single recess, as shown in FIG. 4. In other words, the invention can form a single recess on the peripheral surface 342 to achieve the same function as the aforesaid display device 3.

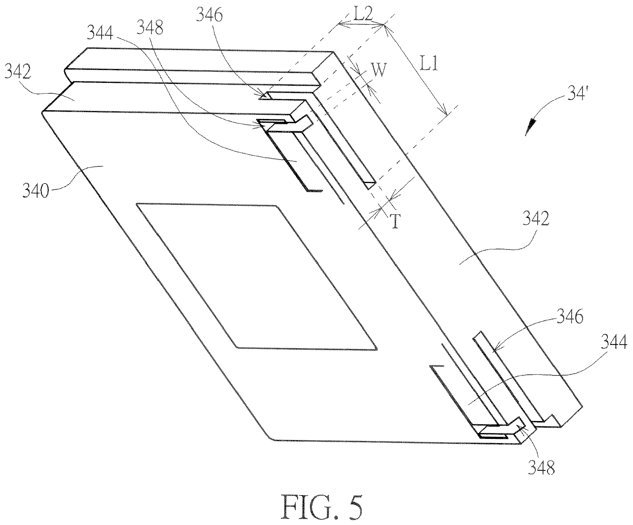

Referring to FIG. 5 along with FIG. 3, FIG. 5 is a perspective view illustrating a light guide structure 34' according to another embodiment of the invention. The difference between the light guide structure 34' and the aforesaid light guide structure 34 is that the light guide structure 34' further includes two second recesses 348 formed on the bottom surface 340 and adjacent to the two plating pads 344, as shown in FIG. 5. When the light guide structure 34 shown in FIG. 2 is replaced by the light guide structure 34' shown in FIG. 5, stress concentration may be reduced in the paste materials 36 more effectively and image sticking may be prevented from occurring in the display panel 30 more effectively.

Preferably, a width W of the second recess 348 in a direction parallel to the bottom surface 340 is larger than or equal to 0.1 mm, such that stress concentration may be reduced in the paste materials 36 more effectively and image sticking may be prevented from occurring in the display panel 30 more effectively.

In this embodiment, the second recess 348 may be formed to communicate or not communicate with the first recess 346 according to practical applications.

As mentioned in the above, the invention forms the first recesses on the peripheral surface and corresponding to the plating pads. When the paste materials deform due to thermal expansion and contraction, the first recesses function as a spring, such that the plating pads can be pulled down as the paste materials contract and the plating pads can be lifted up as the paste materials expand. Accordingly, stress concentration is reduced in the paste materials and image sticking is prevented from occurring in the display panel. Furthermore, the invention may form the second recesses on the bottom surface and adjacent to the plating pads, such that stress concentration may be reduced in the paste materials more effectively and image sticking may be prevented from occurring in the display panel more effectively.

## Claims

1. A display device (3, 3') comprising:
a display panel (30);
a circuit board (32) disposed on the display panel (30);
a light guide structure (34, 34') disposed on the display panel (30), the light guide structure (34, 34') having a bottom surface (340) and a peripheral surface (342), the bottom surface (340) being oriented toward the display panel (30), the peripheral surface (342) being adjacent to the bottom surface (340), two plating pads (344) being formed on the bottom surface (340), two first recesses (346) being formed on the peripheral surface (342) at positions corresponding to the two plating pads (344); and
two paste materials (36) formed between the two plating pads (344) and the circuit board (32), each of the two paste materials (36) being connected to one of the two plating pads (344) correspondingly.

2. The display device (3, 3') of claim 1, further **characterized in that** a thickness of the first recess (346) in a direction perpendicular to the bottom surface (340) is larger than or equal to 0.1 mm.

3. The display device (3, 3') of claim 1, further **characterized in that** a length of the first recess (346) in a direction parallel to the bottom surface (340) exceeds the plating pad (344).

4. The display device (3') of claim 1, further **characterized in that** the two first recesses (346) are formed to communicate with each other, so as to form a single recess.

5. The display device (3) of claim 1, further **characterized in that** two second recesses (348) are formed on the bottom surface (340) and adjacent to the two plating pads (344).

6. The display device (3) of claim 5, further **characterized in that** a width of the second recess (348) in a direction parallel to the bottom surface (340) is larger than or equal to 0.1 mm.

7. The display device (3) of claim 5, further **characterized in that** the second recess (348) is formed to communicate or not communicate with the first recess (346).

## Patentansprüche

1. Display-Gerät (3, 3'), welches umfasst:
ein Display-Paneel (30);
einen Schaltkreis (32), der auf dem Display-Paneel (30) vorgesehen ist;
einen Lichtführungs-Aufbau (34, 34'), der auf dem Display-Paneel (30) vorgesehen ist, worin der Lichtführungs-Aufbau (34, 34') eine Boden-Oberfläche (340) und eine Umfangs-Oberfläche (342) aufweist, worin die Boden-Oberfläche (340) auf das Display-Paneel (30) ausgerichtet ist, worin die Umfangs-Oberfläche (342) neben der Boden-Oberfläche (340) vorgesehen ist, zwei Plattierungs-Pads (344), die auf der Boden-Oberfläche (340) ausgebildet sind, zwei erste Vertiefungen (346), die auf der Umfangs-Oberfläche (342) an Positionen entsprechend den zwei Plattierungs-Pads (344) ausgebildet sind; und
zwei Pasten-Materialien (36), die zwischen den zwei Plattierungs-Pads (344) und dem Schaltkreis (32) ausgebildet sind, worin jedes der zwei Pasten-Materialien (36) mit jeweils einem der zwei Plattierungs-Pads (344) verbunden ist.

2. Display-Gerät (3, 3') nach Anspruch 1, das weiter **dadurch gekennzeichnet ist, dass** eine Dicke der ersten Vertiefung (346) in einer Richtung senkrecht zur Boden-Oberfläche (340) größer oder gleich 0,1 mm ist.

3. Display-Gerät (3, 3') nach Anspruch 1, welches weiter **dadurch gekennzeichnet ist, dass** eine Länge der ersten Vertiefung (346) in einer Richtung parallel zu der Boden-Oberfläche (340) das Plattierungs-Pad (344) überschreitet.

4. Display-Gerät (3') nach Anspruch 1, weiter **dadurch gekennzeichnet, dass** die zwei ersten Vertiefungen (346) ausgebildet sind, um miteinander in Verbindung zu stehen, um eine einzige Vertiefung auszubilden.

5. Display-Gerät (3) nach Anspruch 1, weiter **dadurch gekennzeichnet, dass** zwei zweite Vertiefungen (348) auf der Boden-Oberfläche (340) und neben den zwei Plattierungs-Pads (344) ausgebildet sind.

6. Display-Gerät (3) nach Anspruch 5, weiter **dadurch gekennzeichnet, dass** eine Weite der zweiten Vertiefung (348) in einer Richtung parallel zu der Boden-Oberfläche (340) größer oder gleich 0,1 mm ist.

7. Display-Gerät (3) nach Anspruch 5, weiter **dadurch gekennzeichnet, dass** die zweite Vertiefung (348) ausgebildet ist, um mit der ersten Vertiefung (346) in Verbindung oder nicht in Verbindung zu stehen.

## Revendications

1. Dispositif d'affichage (3, 3') comprenant :
un panneau d'affichage (30) ;
une carte de circuit imprimé (32) disposée sur le panneau d'affichage (30) ;
une structure de guidage de lumière (34, 34') disposée sur le panneau d'affichage (30), la structure de guidage de lumière (34, 34') ayant une surface inférieure (340) et une surface périphérique (342), la surface inférieure (340) étant orientée vers le panneau d'affichage (30), la surface périphérique (342) étant adjacente à la surface inférieure (340), deux pastilles de placage (344) étant formées sur la surface inférieure (340), deux premiers évidements (346) étant formés sur la surface périphérique (342) à des positions correspondant aux deux pastilles de placage (344) ; et
deux matériaux pâteux (36) formés entre les deux pastilles de placage (344) et la carte de circuit imprimé (32), chacun des deux matériaux pâteux (36) étant connecté à l'une des deux pastilles de placage (344) de manière correspondante.

2. Dispositif d'affichage (3,3') selon la revendication 1, **caractérisé en outre en ce qu'**une épaisseur du premier évidement (346) dans une direction perpendiculaire à la surface inférieure (340) est supérieure ou égale à 0,1 mm.

3. Dispositif d'affichage (3, 3') selon la revendication 1, **caractérisé en outre en ce qu'**une longueur du premier évidement (346) dans une direction parallèle à la surface inférieure (340) dépasse la pastille de placage (344).

4. Dispositif d'affichage (3') selon la revendication 1, **caractérisé en outre en ce que** les deux premiers évidements (346) sont formés pour communiquer l'un avec l'autre, de façon à former un seul évidement.

5. Dispositif d'affichage (3) selon la revendication 1, **caractérisé en outre en ce que** deux seconds évidements (348) sont formés sur la surface inférieure (340) et adjacents aux deux pastilles de placage (344).

6. Dispositif d'affichage (3) selon la revendication 5, **caractérisé en outre en ce qu'**une largeur du second évidement (348) dans une direction parallèle à la surface inférieure (340) est supérieure ou égale à 0,1 mm.

7. Dispositif d'affichage (3) selon la revendication 5, **caractérisé en outre en ce que** le second évidement (348) est formé pour communiquer ou ne pas communiquer avec le premier évidement (346).
